# EUROPEAN PATENT APPLICATION

(11) **EP 3 958 530 A1**
(43) Date of publication of application: **23.02.2022**
(21) Application number: 20870478.3
(22) Date of filing: 24.07.2020
(51) Int. Cl.: H04L 29/06, G06N 3/04

(54) **GRAPH NEURAL NETWORK-BASED METHOD, SYSTEM, AND APPARATUS FOR DETECTING NETWORK ATTACK**

(30) Priority: 22.06.2020 CN 202010574294
(71) Applicant: Wangsu Science & Technology Co., Ltd., Shanghai 200030 (CN)
(72) Inventor: HONG, Zhenyu, Shanghai 200030 (CN); HUANG, Meifen, Shanghai 200030 (CN)
(74) Representative: Raynor, Simon Mark
(86) International application number: PCT/CN2020/103936
(87) International publication number: WO 2021/258479

(57) **Abstract**

The present disclosure discloses a network attack detection method, system and device based on a graph neural network. Herein, the method includes: acquiring a training sample sentence, where the training sample sentence includes at least an attack sample sentence having a network attack behavior (SI); setting a character label for a character in the training sample sentence, and building a label graph of the training sample sentence based on the character label (S3); and training a classification model according to the label graph obtain a trained classification model, and using the trained classification model to detect a flow of the network attack behavior (S5).

## Description

### CROSS REFERENCE TO RELATED APPLICATIONS

This disclosure claims for priority to China Patent Application No. 202010574294.4 entitled "NETWORK ATTACK DETECTION METHOD, SYSTEM AND DEVICE BASED ON GRAPH NEURAL NETWORK" and filed on June 22, 2020. The application is incorporated by reference in its entirety.

### TECHNICAL FIELD

The present disclosure relates to the field of Internet technology, in particular to a network attack detection method, system and device based on a graph neural network.

### BACKGROUND

With continuous development of the Internet technology, network attack behaviors are becoming increasingly commonplace. At present, when detecting a network attack behavior, a regular matching or machine learning classification may generally be adopted. Herein, the regular matching can be easily avoided by an attacker through coding or some other disguising means. In machine learning classification, a large number of data samples can be analyzed to summarize features of network attack behaviors which can then be effectively detected. However, a current machine learning classification method has strict requirements on an input data sample, and generally requires an upper limit on the length of the data sample. Therefore, for some long data samples, statement segmentation or default processing may be required, which undoubtedly affects accuracy of detection of an attack behavior.

### SUMMARY

Some embodiments of the present disclosure are intended to provide a network attack detection method, system and device based on a graph neural network, which can improve accuracy of network attack detection.

In order to realize the above objective, the present disclosure provides a network attack detection method based on a graph neural network, the method including: acquiring a training sample sentence, the training sample sentence including at least an attack sample sentence having a network attack behavior; setting a character label for a character in the training sample sentence; building a label graph of the training sample sentence based on the character label; training a classification model according to the label graph to obtain a trained classification model; and using the trained classification model to detect a flow of the network attack behavior.

In order to achieve the above objective, the present disclosure further provides a network attack detection system based on a graph neural network including: a sample acquiring unit configured to acquire a training sample sentence, the training sample sentence at least including an attack sample sentence with a network attack behavior; a label graph building unit configured to set a character label for a character in the training sample sentence, and build a label graph of the training sample sentence based on the character label; and a model training unit configured to train a classification model according to the label graph to detect a flow with the network attack behavior by the trained classification model.

In order to achieve the above objective, the present disclosure further provides a network attack detection device based on a graph neural network. The network attack detection device includes a memory and a processor, the memory configured to store a computer program. When executed by the processor, the computer program implements the above network attack detection method.

Accordingly, the technical solutions provided in one or more embodiments of the present disclosure provide a corresponding character label for each character in a training sample sentence by taking a character as a unit, when building a classification model for detecting network attack behaviors. Then, a label graph of the training sample sentence may be built by using the character labels. Because of using the graph, the network attack detection method may be applicable to both a long text and a short text, and there is no upper or lower limit to data input to a classification model. In addition, through labeling by character, an advantage of a character-level language model in natural language processing is maintained, and it is not necessary to divide the original training sample sentence. Then the classification model is trained according to the label graph, and the trained classification model with higher detection accuracy can be obtained.

### BRIEF DESCRIPTION OF THE DRAWINGS

In order to more clearly illustrate the technical solutions in the embodiments of the present disclosure, the drawings required to be used in the description of embodiments are briefly introduced below, and it is obvious that the drawings in the description below are only some embodiments of the present disclosure. It is obvious for those skilled in the art to obtain other drawings based on these drawings without any creative efforts.
FIG. 1 is a flowchart of a network attack detection method in an embodiment of the present disclosure;
FIG. 2 is a schematic diagram of a directed-label graph in the embodiment of the present disclosure;
FIG. 3 is a schematic diagram of an undirected-label graph in the embodiment of the present disclosure;
FIG. 4 is a label schematic diagram of repeated characters in the embodiment of the present disclosure;
FIG. 5 is a schematic diagram of functional modules of a network attack detection system in the embodiment of the present disclosure;
FIG. 6 is a schematic diagram of a structure of a network attack detection device in the embodiment of the present disclosure.

### DETAILED DESCRIPTION

To make the objective, technical solutions and advantages of the present disclosure clearer, the technical solutions of the present disclosure will be clearly and completely described below with reference to specific embodiments of the present application and accompanying drawings. It is evident that the described embodiments are only some rather than all embodiments of the present disclosure. Based on the embodiments of the present disclosure, all other embodiments obtained by a person of ordinary skill in the art without any creative effort belong to the protection scope of the present disclosure.

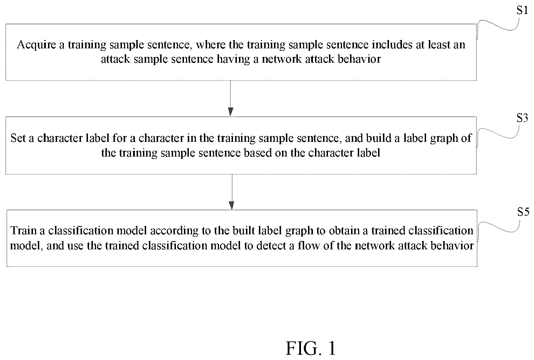

With reference to FIG. 1, an embodiment of the present disclosure relates to a network attack detection method based on a graph neural network. The method may include the following steps.

S1: acquire a training sample sentence, where the training sample sentence includes at least an attack sample sentence having a network attack behavior.

In this embodiment, the training sample sentence may include an attack sample sentence with a network attack behavior, or may include a normal sample sentence without a network attack behavior. Herein, in order to perform better detection on the network attack behavior, the acquired attack sample sentence may include multiple common attack behaviors. For example, the attack behaviors in the attack sample sentence may include an SQL injection, an XSS attack, a third-party component bug (Thinkphp, Fastjson, Struct2 and the like), a command injection, a webshell, a directory traversal etc.

In practice, different types of classification models maybe trained according to different detection objectives. For example, in some scenarios, only some attack behavior(s) need to be detected, while others do not need detection. In this case, the attack behaviors that need to be detected may be of a designated type. Then among acquired training sample sentences, a training sample sentence with a network attack behavior of a designated type may be marked as a positive sample, while an other training sample sentence may be marked as a negative sample (the negative sample may include a normal sentence and an attack sentence with an other attack behavior). In this way, a trained classification model for detecting the network attack behavior of the designated type may be acquired through training. However, if it is necessary to detect any common network attack behavior, the training sample sentence with the network attack behavior may be marked as the positive sample, while the training sample sentence without the network attack behavior may be marked as the negative sample. In this way, the trained classification model for detecting any network attack behaviors may be obtained through training. Accordingly, manners of marking training sample sentences may be different based on different classification models to be trained.

In this embodiment, by performing model training with mixed multiple network attack behaviors, the classification models may effectively learn relevance among different network attack behaviors. In this way, better detection accuracy may be ensured when there are mixed attack sentences.

In one embodiment, due to a difference in sources of training sample sentences, there may be different coding manners for the training sample sentences. Besides, an attacker may usually avoid attack detection through coding. Therefore, in order to improve attack detection accuracy, in this embodiment, after acquiring the training sample sentences, the training sample sentences may be decoded. For example, the training sample sentences may be cyclically decoded as an UTF code. Abnormal sentences such as decoding failure may be deleted from the training sample sentences. Then, a training process of a classification model may be performed based on training sample sentences for which decoding is completed. Alternatively, due to the network attack detection method provided in the present disclosure, an analysis may be performed on characters of a training sample sentence. Therefore, there may be a good training result without decoding. In this way, according to a practical requirement for accuracy and quantity of computing resources, whether to decode the training sample sentences may be decided flexibly.

S3: set a character label for a character in the training sample sentence, and build a label graph of the training sample sentence based on the character label.

In this embodiment, a character-level word segmentation operation may be performed on the decoded or original training sample sentences. Specifically, a training sample sentence may be segmented into individual characters to form a character list. For example, a training sample sentence such as $(ping may be divided into six characters: "$", "(", "p", "i", "n" and "g", to form a character list. The characters may be classified after dividing the training sample sentence by character.

In particular, a large number of training sample sentences may be analyzed in advance to build a preset character dictionary. In the character dictionary, one or more characters may be classified into one category, and each category may correspond to respective classification label. As to a standard for classification and how to set a classification label, these may be flexibly decided according to an actual scenario and this is not defined in the present disclosure. For example, because most sentences in a network access are English and characters, Chinese characters may be grouped in a category, or some characters that are not commonly used may be grouped in a category.

In this embodiment, after the character dictionary is built, the preset character dictionary may be read based on the character list after the characters are segmented, then the characters in the training sample sentences may be classified according to the character dictionary. After the character classification is completed, classification labels may be taken as character labels to be distributed to corresponding characters in the training sample sentences. For example, when a training sample sentence is "$(ping", characters in the character dictionary and corresponding classification labels are {1:p, 2:i, 3:n, 4:g, 5:$, 6:( }. Herein, 1 to 6 are different classification labels. In this way, such a label sequence as "561234" may be acquired after the classification labels are taken as character labels and respectively distributed to their corresponding characters.

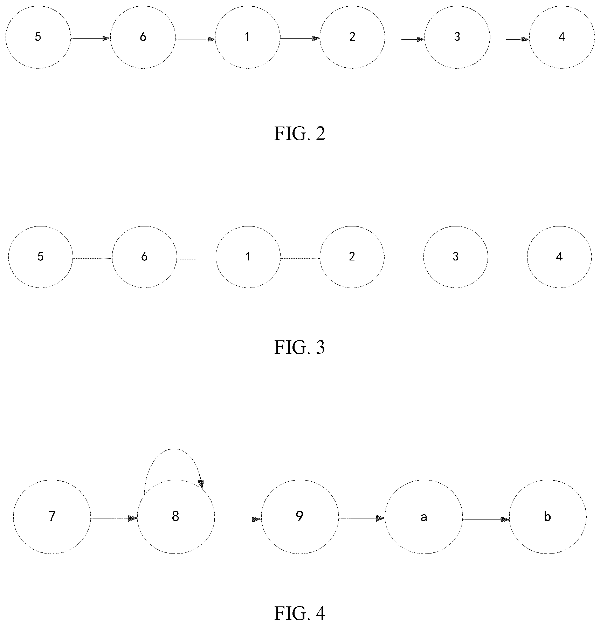

In this embodiment, after distributing corresponding character labels to each character in the training sample sentence, a label graph of the training sample sentence may be built based on the character labels. In particular, with reference to FIG. 2 and FIG. 3, take the sample sentence "$(ping" as an example. When building a label graph, nodes corresponding to each character label may be generated first. In FIG. 2 and FIG. 3, circles with character labels are nodes. Alternatively, in practice, shapes of the nodes may vary according to the character labels. A corresponding relationship between the character labels and node shapes may be set flexibly according to practical application scenarios, and is not defined in the present disclosure. After nodes corresponding to the character labels are generated, the nodes may be arranged sequentially in an order in which the characters appear in the training sample sentence, and a directed line may be added between neighboring nodes to build a directed-label graph of the training sample sentence or an undirected line may be added between neighboring nodes to build an undirected-label graph of the training sample sentence. For example, in FIG. 2 or FIG. 3, the nodes may be arranged in an order in which the characters in "$(ping" appear. In FIG. 2, adjacent nodes may be directly connected through the directed line. The directed line may point to a character from a previous character, thereby the directed-label graph may be built. In FIG. 3, however, neighboring nodes may be connected through an undirected line. The line is not directional, thereby the undirected-label graph may be built.

In practice, when performing a classification model training using the directed-label graph, the classification model may learn a sequential relationship of the characters. After multiple layers of iteration, a feature acquired through learning based on the directed-label graph may include previously far node information. However, for the undirected-label graph, because the nodes are not directed, a learnt feature may include node information of a plurality of nodes before and after. A selection may be performed between the two manners according to an actual application scenario. No particular building manner for a label graph is defined in the present disclosure.

Besides, when building a label graph, there may be multiple connection relationships between nodes. What is exemplified in the above is to connect neighboring nodes through lines. In some application scenarios, two nodes separated by one node may be connected through a line. No connection manner between nodes is defined in the present disclosure, as long as the same connection manner is applied in one training process.

In one embodiment, a training sample sentence may likely include neighboring repeated characters. For example, in a training sample sentence "QWWERF", there are two neighboring characters "W". In regard to neighboring repeated characters as such, when building a label graph, a node may be correspondingly generated in regard to each repeated character in the above manner. In this way, two neighboring identical nodes may be generated in the label graph. In another embodiment, a single one node may be generated in regard to repeated characters. Then a closed-loop line may be added to the nodes to indicate the repeated characters. In particular, with reference to FIG. 4, a distributed character label in regard to a character "W" is 8, so when building a label graph, only one node of the character label 8 may be generated and one closed-loop line may be added to the node. A type of the closed-loop line may be identical to the type of other lines (either directed or undirected). In this way, another character "W" may be indicated through the closed-loop line.

S5: train a classification model according to the label graph to obtain a trained classification model, and use the trained classification model to detect a flow of the network attack behavior.

In this embodiment, after the label graph of the training sample sentence is built, the label graph may be used to perform training of the classification model. In order to improve training accuracy of the classification model, the character labels in the label graph may be converted into word vectors before feature extraction using a graph algorithm. In particular, an embedded layer may be used for a first layer of the neural network of the classification model. Through the embedded layer, a character label in an input label graph may be converted to a word vector. Besides, a character-level language model that completes training in advance may be applied to map a character to a corresponding character vector through transfer learning. Alternatively, in practice, there may be other methods for converting the character label to a character vector, which is not exemplified herein.

In this embodiment, after the character label in the label graph is converted to the character vector, the character vector may replace the original character label, thereby the original label graph with the character label may be converted to a vector graph with the character vector. Then a preset graph algorithm and other algorithms may be used to learn the vector graph. In particular, the preset graph algorithm may be such algorithms as Graph Convolutional Network, GraphSAGE etc. The other algorithms may be, for example, Normalization, Pooling, Attention or Dropout etc. After feature extraction is performed by using the graph algorithm on the vector graph, the classification model may be trained based on an extracted feature.

In one embodiment, a shallow feature may be extracted well through the graph algorithm while a multi-layer algorithm does not work well and cannot learn a deeper feature. Therefore, in order to improve the training accuracy of the classification model, after feature extraction is performed by using the preset graph algorithm, a preset neural network algorithm may be used to perform feature extraction again on a graph feature extracted by using the preset graph algorithm, and a trained classification model using a secondly extracted feature may be acquired. Herein, the preset neural network algorithm may be similar or variant algorithms such as Fully Connected Layer, Convolutional Neural Network and Recurrent Neural Network. In this way, the trained classification model with higher accuracy may be acquired with a two-step feature extraction.

In this embodiment, after the training of the classification model is completed, the trained classification model may be used to detect network attack behaviors. In particular, in regard to the acquired sentences to be detected, character labels may be set for the characters in the sentence to be detected according to the above manner of processing the training sample sentence, so as to build the label graph of the sentence to be detected based on the character label. Then, the trained classification model after the training may be used to convert the label graph of the sentence to be detected to a vector graph including character vectors, and to perform feature extraction on the vector graph, thereby outputting a predicted result of the sentence to be detected according to the extracted feature.

Accordingly, the network attack detection method provided in the present disclosure may have preferable features of both traditional machine learning and deep learning. To express by using a graph, the network attack detection method may be applicable to both a long text and a short text, so that there is not upper or lower limit to input data, which may have good features similar to that of deep learning, a feature may be extracted automatically and a relevance between different network attack behaviors may be learnt easily. For the short text, a computer resource is saved and high-level accuracy is ensured because a common input data filling and other conversion manners are omitted. For the long text, there is no need to perform a cutting or segmentation operation, thereby detection efficiency is improved. Further, by embedding and combining words with a graph, an advantage of a character-level language model in natural language processing is maintained, and it is not necessary to cut or convert original data. When learning a large number of different sentences of network attack behaviors, a relevance between attacks may be learnt, thereby a mixed attack may be better detected.

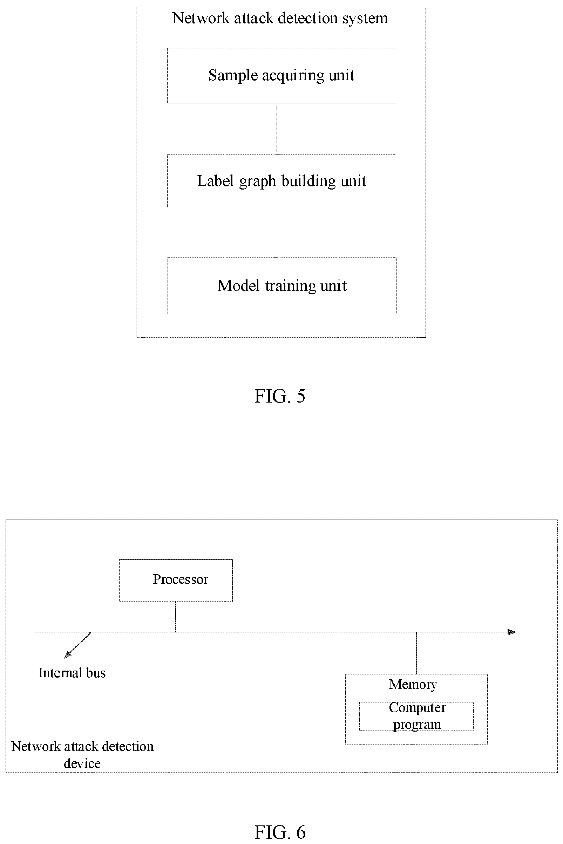

With reference to FIG. 5, the present disclosure further provides a network attack detection system based on a graph neural network, including:
a sample acquiring unit configured to acquire a training sample sentence, and herein the training sample sentence at least includes an attack sample sentence with a network attack behavior;
a label graph building unit configured to set a character label for a character in the training sample sentence, and build a label graph of the training sample sentence based on the character label; and
a model training unit configured to train a classification model according to the label graph to detect a flow with the network attack behavior by a trained classification model.

In one embodiment, the label graph building unit includes:
a character dictionary reading module configured to read a preset character dictionary, herein the preset character dictionary is used for setting character classification for each character;
a classification module configured to divide the training sample sentence by character, and classify each character in the training sample sentence according to the preset character dictionary; and
a label distribution module configured to distribute a classification label as the character label to a corresponding character in the training sample sentence.

In one embodiment, the label graph building unit includes:
a node connection module configured to generate nodes respectively corresponding to character labels, sequence the nodes in an order in which characters appear in the training sample sentence, and add a directed line between neighboring nodes to build a directed label graph of the training sample sentence or add an undirected line between the neighboring nodes to build an undirected label graph of the training sample sentence.

In one embodiment, the model training unit includes:
a vector graph generation module configured to convert the character label in the label graph into a word vector to generate a vector graph containing the word vector; and
a training module configured to learn the vector graph by using a preset graph algorithm to acquire the trained classification model through training.

With reference to FIG. 6, the present disclosure further provides a network attack detection device based on a graph neural network. The network attack detection device includes a memory and a processor. The memory is configured to store a computer program. When executed by the processor, the computer program may implement the above network attack detection method.

In the present disclosure, the memory may include a physical device for storing information. Generally, information is digitized and then stored in an electrical, magnetic, or optical medium. The memory may further include a device that stores information with electric power, for example, an RAM or ROM; a device that stores information with magnetic power, for example, a hard disk, a floppy disk, a tape, a magnetic core memory, a bubble memory, or a U disk; a device that stores information in an optical manner, for example, a CD or DVD. Alternatively, there are other types of memories, for example, a quantum memory or graphene memory.

In the present disclosure, the processor may be implemented in any appropriate manner. For example, the processor may be a microprocessor, or may be such a computer-readable medium being able to store computer-readable program codes (e.g., software or hardware) executable by the (micro)processor, a logic gate, a switch, an application specific integrated circuit (ASIC), a programmable logic controller or an embedded microcontroller.

Accordingly, the technical solutions provided in one or more embodiments of the present disclosure provide a corresponding character label for each character in a training sample sentence by taking a character as a unit when building the classification model for detecting network attack behaviors. Then, a label graph of the training sample sentence may be built by using the character labels. Because of using the graph, the network attack detection method may be applicable to both a long text and a short text, and there is no upper or lower limit to data input to a classification model. In addition, through labeling by character, an advantage of a character-level language model in natural language processing is maintained, and it is not necessary to divide the original training sample sentence. Then the classification model is trained according to the label graph, and a trained classification model with higher detection accuracy can be obtained.

All the embodiments in the present disclosure are described in a progressive manner, identical or similar parts in the respective embodiments may refer to each other, and what is emphasized in each embodiment is a difference from other embodiments. In particular, the system and device embodiments may be described with reference to the method embodiments.

Those skilled in the art shall appreciate that the embodiments in the present disclosure may be provided as a method, a system, or a computer program product. Therefore, the present disclosure may be in a form of all hardware embodiments, all software embodiments or a combination of both software and hardware embodiments. In addition, the present disclosure may be in a form of computer program product applied to one or more computer usable storage mediums (including but not limited to a magnetic disk memory, a CD-ROM and an optical memory) having computer usable program codes.

The present disclosure is described with reference to flowcharts and/or block diagrams in accordance with the method, device (system) and a computer program product in embodiments of the present disclosure. It shall be appreciated that each process and/or block in the flowcharts and/or block diagrams, and a combination of processes and/or blocks in the flowcharts and/or block diagrams may be implemented by computer program instructions. These computer program instructions may be provided to a processor of a general-purpose computer, a special-purpose computer, an embedded processor, or other programmable data processing equipment to produce a machine, so that the instructions executed by the processor of the computer or other programmable data processing equipment generate a device that realizes functions specified in one process or multiple processes in the flowcharts and/or one block or multiple blocks in the block diagrams.

These computer program instructions may further be stored in a computer readable memory that can lead a computer or another programmable data processing device to work in a particular manner, so that instructions stored in the computer readable memory generate a product including the instruction device which realizes a function designated in one or more processes in the flowcharts and/or one or more blocks in the block diagrams.

These computer program instructions may further be loaded to a computer or another programmable data processing device, so that a series of operation steps are implemented on the computer or programmable device to generate processing realized by the computer, thereby instructions executed on the computer or another programmable device provide steps for implementing functions designated in one or multiple processes in the flowcharts and/or one or more blocks in the block diagrams.

In a typical configuration, a computer device includes one or more processors (CPU), an input/output interface, a network interface and a memory.

The memory may be a volatile memory in a computer readable medium, a random access memory (RAM) and/or a non-volatile memory, for example, a read-only memory (ROM) or a flash RAM. The memory is just an example of computer readable media.

The computer readable medium may be a nonvolatile or volatile, and removable or non-removable medium, and may realize information storage in any method or technique. Information may be a computer readable instruction, a data structure, a program module or any other data. Examples for a storage medium of a computer may include but are not limited to a Phase Change Random Access Memory (PRAM), a static random-access memory (SRAM), a dynamic random access memory (DRAM), a random access memory (RAM) of another type, a read-only memory (ROM), an electrically-erasable programmable read-only memory (EEPROM), a flash memory or other memory technology, a compact disk read-only memory (CD-ROM), a digital versatile disk (DVD) or other optical storage, magnetic cassette tape, magnetic tape storage or other magnetic storage device or any other non-transmission media that can be used to store information that can be accessed by computing devices. According to the definition in the present disclosure, a computer-readable media does not include transitory media, for example, modulated data signals and carrier waves.

It shall be noted that terms such as "comprise", "include" or any other variants are inclusive rather than exclusive. Therefore, a process, method, product or device including a series of elements not only includes these elements but also other elements not listed, or further includes elements essential to the process, method, product or device. Without more limitations, an element defined by "including a... " does not exclude other identical elements in the process, method, product or device.

The above are only embodiments of the present disclosure and are not to limit the present disclosure. For those skilled in the art, the present disclosure may include modifications and variants. Any amendment, equivalent substitution and improvement within the spirit and principle of the present disclosure shall be included in the scope of the Claims of the present disclosure.

## Claims

1. A network attack detection method based on a graph neural network, comprising:
acquiring a training sample sentence, the training sample sentence including at least an attack sample sentence having a network attack behavior;
setting a character label for a character in the training sample sentence;
building a label graph of the training sample sentence based on the character label;
training a classification model according to the label graph to obtain a trained classification model; and
using the trained classification model to detect a flow of the network attack behavior.

2. The method according to claim 1, after acquiring the training sample sentence, further comprising:
marking the training sample sentence according to a type of the classification model to be trained.

3. The method according to claim 1 or 2, wherein the training sample sentence is marked in the following manner:
marking a training sample sentence having a network attack behavior of a specified type as a positive sample, and marking an other training sample sentence as a negative sample, when the classification model is used for detecting the network attack behavior of the specified type; and
marking a training sample sentence having the network attack behavior as the positive sample, and marking a training sample sentence not having the network attack behavior as the negative sample, when the classification model is used for detecting a network attack behavior of any type.

4. The method according to claim 1, after acquiring the training sample sentence, further comprising:
decoding the training sample sentence and deleting a training sample sentence failing to be decoded.

5. The method according to claim 1, the setting the character label for the character in the training sample sentence comprises:
reading a preset character dictionary, wherein the preset character dictionary is used for setting character classification for each character in the training sample sentence;
dividing the training sample sentence by character, and classifying the each character in the training sample sentence according to the preset character dictionary; and
distributing a classification label as the character label to a corresponding character in the training sample sentence.

6. The method according to claim 1 or 5, wherein the building the label graph of the training sample sentence based on the character label comprises:
generating nodes respectively corresponding to character labels, sequencing the nodes in an order in which characters appear in the training sample sentence, and adding a directed line between neighboring nodes to build a directed label graph of the training sample sentence or adding an undirected line between the neighboring nodes to build an undirected label graph of the training sample sentence.

7. The method according to claim 6, wherein when the training sample sentence comprises neighboring repeated characters, the generating the nodes respectively corresponding to the character labels comprises:
generating only one node in regard to the neighboring repeated characters, and adding a closed-loop line to the only one node to indicate the neighboring repeated characters through the closed-loop line.

8. The method according to claim 1, wherein the training the classification model according to the label graph comprises:
converting the character label in the label graph into a word vector to generate a vector graph comprising the word vector; and
learning the vector graph by using a preset graph algorithm to acquire the trained classification model.

9. The method according to claim 8, after learning the vector graph by using the preset graph algorithm, further comprising:
performing feature extraction again, by using a preset neural network algorithm, on a graph feature extracted through the preset graph algorithm, and acquiring the trained classification model using a re-extracted feature.

10. The method according to claim 1, further comprising:
acquiring a sentence to be detected, and setting a character label for a character in the sentence to be detected to build a label graph of the sentence to be detected based on the character label; and
using the trained classification model to convert the label graph of the sentence to be detected into a vector graph comprising a word vector, and performing feature extraction on the vector graph comprising the word vector to output a predicted result of the sentence to be detected according to an extracted feature.

11. A network attack detection system based on a graph neural network, comprising:
a sample acquiring unit, configured to acquire a training sample sentence, the training sample sentence including at least an attack sample sentence having a network attack behavior;
a label graph building unit, configured to set a character label for a character in the training sample sentence, and build a label graph of the training sample sentence based on the character label; and
a model training unit, configured to train a classification model according to the label graph to obtain a trained classification model; and using the trained classification model to detect a flow of the network attack behavior.

12. The system according to claim 11, wherein the label graph building unit comprises:
a character dictionary reading module, configured to read a preset character dictionary, wherein the preset character dictionary is used for setting character classification for each character in the training sample sentence;
a classification module, configured to divide the training sample sentence by character, and classify the each character in the training sample sentence according to the preset character dictionary; and
a label distribution module, configured to distribute a classification label as the character label to a corresponding character in the training sample sentence.

13. The system according to claim 11 or 12, wherein the label graph building unit comprises:
a node connection module, configured to generate nodes respectively corresponding to character labels, sequence the nodes in an order in which characters appear in the training sample sentence, and add a directed line between neighboring nodes to build a directed label graph of the training sample sentence or add an undirected line between the neighboring nodes to build an undirected label graph of the training sample sentence.

14. The system according to claim 11, wherein the model training unit comprises:
a vector graph generation module, configured to convert the character label in the label graph into a word vector to generate a vector graph containing the word vector; and
a training module, configured to learn the vector graph by using a preset graph algorithm to acquire the trained classification model.

15. A network attack detection device based on a graph neural network, comprising a memory and a processor, the memory configured to store a computer program, wherein when executed by the processor, the computer program implements the method according to any one of claims 1 to 10.
